# EUROPÄISCHE PATENTSCHRIFT

(11) **EP 3 834 189 B1**
(45) Veröffentlichungstag und Bekanntmachung des Hinweises auf die Patenterteilung: **15.04.2026**
(21) Anmeldenummer: 19755824.0
(22) Anmeldetag: 30.07.2019
(51) Int. Cl.: G08G 1/16, G06V 20/58, B60W 30/095

(54) **VERFAHREN UND STEUERVORRICHTUNG ZUM WARNEN EINES FAHRERS EINES KRAFTFAHRZEUGS SOWIE KRAFTFAHRZEUG MIT EINER DERARTIGEN STEUERVORRICHTUNG**
METHOD AND CONTROL DEVICE FOR WARNING A DRIVER OF A MOTOR VEHICLE, AND MOTOR VEHICLE HAVING SUCH A CONTROL DEVICE
PROCÉDÉ ET DISPOSITIF DE COMMANDE SERVANT À AVERTIR UN CONDUCTEUR D'UN VÉHICULE AUTOMOBILE, ET VÉHICULE AUTOMOBILE ÉQUIPÉ D'UN DISPOSITIF DE COMMANDE DE CE TYPE

(30) Priorität: 07.08.2018 DE 102018213230
(43) Veröffentlichungstag der Anmeldung: 16.06.2021
(73) Patentinhaber: VOLKSWAGEN AKTIENGESELLSCHAFT, 38440 Wolfsburg (DE)
(72) Erfinder: WENDLAND, Hannes, 85055 Ingolstadt (DE); SPIKA, Marius, 38104 Braunschweig (DE); SONNENBERG, Jan, 38530 Didderse (DE); HEINZE, Theodor, 38350 Helmstedt (DE)
(86) Internationale Anmeldenummer: PCT/EP2019/070403
(87) Internationale Veröffentlichungsnummer: WO 2020/030467

(56) Entgegenhaltungen:
- EP-A1- 1 865 479
- EP-A1- 2 168 815
- DE-A1- 102011 084 367
- DE-A1- 102012 012 591
- GB-A- 2 536 474
- US-A1- 2012 268 262

## Beschreibung

Die Erfindung betrifft ein Verfahren und eine Steuervorrichtung zum Warnen eines Fahrers eines Kraftfahrzeugs sowie ein Kraftfahrzeug mit einer derartigen Steuervorrichtung.

In Kraftfahrzeugen stehen immer häufiger Innenraumkameras zur Verfügung, mit denen eine Fahrerkopfposition und eine visuelle Aufmerksamkeit eines Fahrers des Kraftfahrzeugs erfassbar sind. Basierend auf derartigen Erfassungseinrichtungen sind Eingriffe in ein Fahrverhalten sowie ein Unterstützen des Fahrers, sobald festgestellt wird, dass dessen Aufmerksamkeit reduziert ist, möglich. Derartige Techniken zur Erhöhung der Fahrsicherheit spielen heutzutage eine größer werdende Rolle in der Bewertung von Sicherheitssystemen in Kraftfahrzeugen und sind beispielsweise ein relevanter Bestandteil von Strategieprogrammen von Verbänden für Fahrzeugsicherheit, wie sie beispielsweise vom Europäischen Neuwagen-Bewertungs-Programm (Euro NCAP, für englisch European New Car Assessment Programme) veröffentlich werden. Um derartige angepasste Eingriffe zur Unterstützung des Fahrers zu ermöglichen, muss jedoch zunächst eine Fahrerwahrnehmung modelliert und mit einer Umgebung des Kraftfahrzeugs abgeglichen werden.

In der DE 10 2012 214 852 A1 wird ein Verfahren zum Ergänzen einer einem Objekt zugeordneten Objektinformation beschrieben, wobei das Objekt in einem Umfeld eines Fahrzeugs angeordnet ist. Im Rahmen des Verfahrens wird eine Sensorinformation eingelesen, die eine Reaktion eines Fahrers des Fahrzeugs auf das sich in einer Blickrichtung des Fahrers befindliche Objekt repräsentiert. Die Sensorinformation wird daraufhin ausgewertet, um eine Erkennungsinformation zu erhalten, die Informationen darüber enthält, ob der Fahrer des Fahrzeugs das Objekt erkannt hat. Mithilfe dieses Verfahrens kann somit ermittelt werden, ob ein Objekt, das beispielsweise aufgrund von widrigen Witterungsbedingungen oder aufgrund der Tatsache, dass der Fahrer des Kraftfahrzeugs abgelenkt oder übermüdet ist, schwer zu sehen ist, tatsächlich von dem Fahrer erkannt wurde. Falls der Fahrer des Kraftfahrzeugs ein potentiell gefährliches Objekt, bei dem beispielsweise die Gefahr einer Kollision des Fahrzeugs mit dem Objekt besteht, nicht erkennt, kann zum Beispiel ein autonomer Bremsvorgang eingeleitet werden. Dieses Verfahren zum Überprüfen der visuellen Aufmerksamkeit des Fahrers des Kraftfahrzeugs basiert also auf Sensordaten des Kraftfahrzeugs sowie auf einer Überprüfung der Sicht des Fahrers anhand von Kopf- und/oder Augenpositionen des Fahrers im Kraftfahrzeug. Sich zwar im Umfeld des Fahrzeugs aufhaltende jedoch für den Fahrer nicht sichtbare potentiell gefährliche Objekte werden im Rahmen des Verfahrens nicht berücksichtigt.

Die EP 1 865 479 A1 zeigt eine Berechnungsvorrichtung für einen Bereich einer Fahrzeugumgebungsinformationsvorrichtung, in dem ein verstecktes Hindernis, das sich einem eigenen Fahrzeug nähert, wahrscheinlich existiert, basierend auf vom eigenen Fahrzeug erfassten Fahrinformationen. Falls das versteckte Hindernis erkannt wird, informiert ein Informationsgerät über das versteckte Hindernis.

Die GB 2536474 A zeigt ein Verfahren zur Überwachung des Situationsbewusstseins eines Fahrzeugführers. Es umfasst den Empfang von Augenbewegungsinformationen, Verfolgungsinformationen eines oder mehrerer Objekte außerhalb des Fahrzeugs und deren Korrelation, um festzustellen, ob die Augenbewegung des Fahrers einer relativen Bewegung der externen Objekte entspricht.

Es ist eine Aufgabe der Erfindung, eine Lösung bereitzustellen, mit deren Hilfe entschieden werden kann, wann die Aufmerksamkeit eines Fahrers eines Kraftfahrzeugs auf ein für ihn potentiell gefährliches Objekt gelenkt werden sollte.

Diese Aufgabe wird durch ein Verfahren und eine Steuervorrichtung zum Warnen eines Fahrers eines Kraftfahrzeugs gemäß den unabhängigen Patentansprüchen gelöst. Vorteilhafte Ausgestaltungen mit zweckmäßigen und nicht-trivialen Weiterbildungen der Erfindung sind in den abhängigen Ansprüchen angegeben.

Das erfindungsgemäße Verfahren zum Warnen eines Fahrers eines Kraftfahrzeugs umfasst die Schritte nach Anspruch 1.

In einer nicht beanspruchten Ausführungsform wird überprüft, ob von der Erfassungseinrichtung im anhand der empfangenen Positionsdaten und der Eigenposition bestimmten Sichtbereich zwischen dem Kraftfahrzeug und dem ersten Objekt das erste Objekt identifiziert wird. Falls von der Erfassungseinrichtung das erste Objekt nicht identifiziert wird und sich durch das erste Objekt die potentielle kritische Situation für das Kraftfahrzeug ergibt, erfolgt das Einleiten der vorgegebenen Warnkaskade.

Das erfindungsgemäße Verfahren dient also dazu, einen Fahrer eines Kraftfahrzeugs bezüglich eines für ihn verdeckten Objekts zu warnen. Hierfür werden dem Kraftfahrzeug zunächst Positionsdaten eines potentiell verdeckten Objekts übermittelt, das im Folgenden als das erste Objekt bezeichnet wird. Diese Positionsdaten werden von einer dafür ausgelegten Kommunikationseinrichtung des Kraftfahrzeugs empfangen, und zwar beispielsweise mittels einer Vehicle-to-X-, Car-to-X- oder insbesondere einer Car-to-Car-Kommunikation. Bei der fahrzeugexternen Kommunikationseinrichtung kann es sich somit beispielsweise um einen anderen Verkehrsteilnehmer, wie ein anderes Fahrzeug oder ein anderes Kraftfahrzeug, oder eine Infrastruktureinheit oder das verdeckte Objekt selbst, insbesondere ein anderes Fahrzeug oder ein anderes Kraftfahrzeug, handeln. Des Weiteren liegen dem Kraftfahrzeug von dem Kraftfahrzeug selbst mit einer entsprechenden Erfassungseinrichtung erfasste Daten vor. Die Erfassungseinrichtung umfasst beispielsweise Fahrzeugsensoren, wie eine Frontkamera, Seitenkameras, eine Heckkamera, optische Abstands- und Geschwindigkeitsmesser, wie Lidar-Geräte (englisch light detection and ranging), Radargeräte oder Ultraschallgeräte. Die von diesen Einrichtungen bereitgestellten Daten enthalten Informationen über eine Umgebung des Kraftfahrzeugs, beispielsweise über sich in der Nähe des Kraftfahrzeugs befindende Objekte, wie anderen Verkehrsteilnehmer, Gebäude, Vegetation, Verkehrszeichen, Hindernisse, wie zum Beispiel ein Hügel oder Berg, Personen oder Gegenstände. Ein in der Fahrzeugumgebung von der Erfassungseinrichtung erfasstes Objekt wird im Folgenden als zweites Objekt bezeichnet. Zudem verfügt das Kraftfahrzeug über Informationen darüber, wo es sich zu einem aktuellen Zeitpunkt befindet. Hierfür erfolgt beispielsweise eine Verortung des Kraftfahrzeugs mithilfe von GPS-Daten oder anhand eines Abgleichs der in der Fahrzeugumgebung mit der Erfassungseinrichtung erkannten Objekte mit Informationen aus in dem Kraftfahrzeug hinterlegten Karten.

Basierend auf den genannten im Kraftfahrzeug bereitgestellten Daten, das heißt basierend auf den Positionsdaten des ersten Objekts, der erfassten Fahrzeugumgebung sowie der erfassten Eigenposition wird in einem weiteren Schritt überprüft, ob das erste Objekt für das Kraftfahrzeug verdeckt ist, das heißt, ob das erste Objekt prinzipiell vom Kraftfahrzeug aus zu sehen ist. Hierfür wird zunächst basierend auf den empfangenen Positionsdaten und der Eigenposition der Sichtbereich, das heißt der Bereich der Umgebung des Kraftfahrzeugs, der für die Erfassungseinrichtung und/oder für einen Fahrer des Kraftfahrzeugs sichtbar ist, definiert. Der sogenannte Sichtbereich ist also zumindest ein Teilbereich eines gesamten Erfassungsbereichs der Erfassungseinrichtung. Falls in dem derart bestimmten Sichtbereich das erste Objekt nicht erkannt wird, das heißt, ein von der Erfassungseinrichtung im Sichtbereich erfasstes Objekt nicht eindeutig als das erste Objekt identifiziert werden kann, lässt sich darauf schließen, dass das erste Objekt von dem Kraftfahrzeug aus nicht zu sehen ist und somit für dieses verdeckt ist. Zusätzlich oder alternativ dazu lässt sich darauf schließen, dass das erste Objekt von dem Kraftfahrzeug aus nicht zu sehen ist und somit für dieses verdeckt ist, falls von der Erfassungseinrichtung ein zweites Objekt erfasst wird, das zwischen dem Kraftfahrzeug und dem ersten Objekt, von dem die Positionsdaten bereitgestellt sind, erkannt wird. Das zweite Objekt muss hierbei nicht erkannt oder identifiziert werden, sondern es ist ausreichend, wenn erkannt wird, dass sich etwas, das heißt ein als zweites Objekt bezeichnetes Hindernis, zwischen dem Kraftfahrzeug und dem ersten Objekt befindet.

Beim Identifizieren des ersten Objekt mit der Erfassungseinrichtung ist Voraussetzung, dass die Positionsdaten des ersten Objekts im Erfassungsbereich der Erfassungseinrichtung des Kraftfahrzeugs liegen. Falls diese Bedingung nicht erfüllt ist, wird lediglich überprüft, ob ein zweites das erste Objekt verdeckendes Objekt erfasst wird. Zudem kann eine minimale Identifizierungswahrscheinlichkeit definiert und im Kraftfahrzeug hinterlegt werden. Sobald das erste Objekt mit einer Wahrscheinlichkeit, die größer als diese minimale Identifizierungswahrscheinlichkeit ist, als das erste Objekt identifiziert wird, dessen Positionsdaten vom Kraftfahrzeug empfangen wurden, gilt das erste Objekt als eindeutig identifiziert und somit als unverdeckt. Dies ist insbesondere in Hinblick auf eine Teilverdeckung des ersten Objekts, beispielsweise durch einen relativ lichten Wald, relevant, durch den das erste Objekt verdeckende zweite Objekte erfasst werden, die jedoch womöglich das erste Objekt nicht vollständig verdecken, weshalb des erste Objekt für den Fahrer des Kraftfahrzeugs sichtbar sein kann. Beim Identifizieren des ersten Objekts können zudem objektspezifische Erkennungsmerkmale, wie zum Beispiel eine Größe, Farbe und Oberflächenbeschaffenheit des ersten Objekts, berücksichtigt werden, die zusätzlich zu den Positionsdaten des ersten Objekts vom Kraftfahrzeug empfangen wurden.

Bei dem ersten Objekt kann es sich beispielsweise um ein anderes Fahrzeug handeln, dass jedoch vom Kraftfahrzeug selbst nicht zu sehen ist, da sich zwischen der Straße, auf der das Kraftfahrzeug fährt und der Straße, auf der das andere Fahrzeug, das erste Objekt, fährt, ein Hügel oder ein Wald befindet. Bei dem zweiten Objekt, das das erste Objekt verdeckt, kann es sich somit beispielsweise um ein Hindernis, wie eine Ansammlung von Bäumen, handeln, die die Sicht auf das erste Objekt, das heißt das andere Fahrzeug, verdecken. Handelt es sich bei dem zweiten Objekt beispielsweise um einen Hügel, dann ist das hinter dem Hügel fahrende Kraftfahrzeug, das beispielsweise auf einer Straße fährt, die die Straße, auf der aktuell das Kraftfahrzeug fährt, kreuzt, weder mit einem Radargerät des Kraftfahrzeugs noch mit den Front- und Seitenkameras erfassbar. Aufgrund der von diesem Fahrzeug, das heißt dem ersten Objekt, übermittelten Positionsdaten, die in diesem Fall über eine Car-to-Car-Kommunikation an das Kraftfahrzeug übermittelt werden, ist dem Kraftfahrzeug jedoch die Anwesenheit sowie die Position dieses anderen Fahrzeugs bekannt. Da sich innerhalb des Sichtbereichs auf das andere Fahrzeug jedoch ein Hindernis, das heißt in dieser Situation der Hügel, befindet, ist das erste Objekt von der Erfassungseinrichtung des Kraftfahrzeugs nicht erfassbar. In dieser Situation ist also das andere Fahrzeug nicht identifizierbar und zudem wird ein zweites Objekt erkannt, dass das andere Fahrzeug verdeckt.

Jedoch kann der Fahrer des Kraftfahrzeugs dennoch über die Anwesenheit des anderen Fahrzeugs, das heißt des ersten Objekts, informiert werden. Dies erfolgt beispielsweise immer dann, wenn sich eine potentiell kritische Situation für das Kraftfahrzeug aufgrund des erfassten verdeckten ersten Objekts ergibt. Es wird also in einem weiteren Schritt des Verfahrens überprüft, ob es möglicherweise zu einer Kollision des ersten Objekts, von dem die Positionsdaten empfangen wurden, mit dem Kraftfahrzeug kommt. Hierbei werden verschiedene Annahmen für ein Fahrverhalten beziehungsweise Bewegungsverhalten des ersten Objekts sowie des Kraftfahrzeugs selbst berücksichtigt.

Wird sowohl erkannt, dass das erste Objekt verdeckt ist als auch festgestellt, dass durch das erste Objekt möglicherweise eine kritische Situation für das Kraftfahrzeug entsteht, wird im Rahmen des Verfahrens ein bestimmtes Warnprozedere durchgeführt. Dieses Warnprozedere, die sogenannte Warnkaskade, unterscheidet, ob sich das Kraftfahrzeug im Verhältnis zu dem Ort der potentiell kritischen Situation noch in einem Komfortbereich, indem keine akute Gefahr für das Kraftfahrzeug und seine Insassen besteht, befindet, oder ob sich das Kraftfahrzeug bereits in einem potentiell kritischen Bereich oder sogar einem tatsächlich kritischen Bereich befindet. Je nachdem wie wahrscheinlich der tatsächliche Zusammenstoß mit dem ersten Objekt ist sowie abhängig davon, in welcher zeitlichen Nähe zu einem aktuellen Zeitpunkt der potentielle Zusammenstoß stattfinden wird, das heißt die potentiell kritische Situation eintreten wird, werden verschiedene Warnsignale an den Fahrer des Kraftfahrzeugs ausgegeben. Diese Warnsignale können von einer relativ einfachen Anzeige auf einer Anzeigefläche im Fahrzeuginneren, beispielsweise einer leuchtenden Lampe oder einem Anzeigetext, bis zu akustischen Warntönen oder sogar einem Eingreifen in das Fahrverhalten, beispielsweise durch ein automatisch durchgeführtes Abbremsen des Kraftfahrzeugs, gesteigert werden. Die Warnsignale eskalieren also abhängig von der Dringlichkeit, mit der der Fahrer auf die Signale reagieren sollte. Zunächst kann beispielweise ein relativ wenig störendes Warnsignal aktiviert werden, wie beispielsweise die leuchtende Lampe. Bei ausbleibender Reaktion des Fahrers wird dieses Warnsignal gesteigert, beispielsweise indem zusätzlich die akustischen Warntöne aktiviert werden. Führt auch dieses verstärkte Warnsignal nicht zu der gewünschten Reaktion des Fahrers kann beispielsweise das automatische durchgeführte Abbremsen des Kraftfahrzeugs erfolgen.

Generell sind verschiedene Reihenfolgen der einzelnen Verfahrensschritte möglich. In einer ersten Variante des Verfahrens werden zunächst Positionsdaten von allen Objekten in einer Umgebung des Kraftfahrzeugs empfangen und basierend auf diesen Positionsdaten unter Berücksichtigung der erfassten Fahrzeugumgebung und der Eigenposition bestimmt, ob die einzelnen Objekte jeweils für das Kraftfahrzeug verdeckt sind oder nicht. Für alle verdeckten Objekte wird daraufhin ermittelt, ob sich durch die jeweiligen verdeckten Objekte die potentiell kritische Situation ergibt. Falls die potentiell kritische Situation für ein jeweiliges Objekt gegeben ist, wird die vorgegebene Warnkaskade bezogen auf dieses Objekt eingeleitet. In einer zweiten Variante werden zunächst alle anhand von empfangenen Positionsdaten erkannten Objekte in der Fahrzeugumgebung hinsichtlich der potentiell kritischen Situation, die sich durch diese Objekte für das Kraftfahrzeug ergeben könnte, untersucht. Für alle potentiell kritischen Objekte, das heißt alle Objekte, durch die sich eine potentiell kritische Situation für das Kraftfahrzeug ergibt, werden daraufhin dahin gehend überprüft, ob diese Objekte durch jeweilige zweite Objekte verdeckt werden. Daraufhin werden für alle die Objekte, durch die sich eine potentiell kritische Situation ergibt und die im Folgeschritt auch als verdeckte Objekte erkannt wurden, eine entsprechende Warnkaskade eingeleitet. Ob ein erstes Objekt, dessen Positionsdaten von dem Kraftfahrzeug empfangen wurden, zunächst hinsichtlich einer sich durch dieses Objekt ergebenden potentiell kritischen Situation oder hinsichtlich einer Verdeckung durch ein zweites Objekt überprüft wird, ist also gemäß dem erfindungsgemäßen Verfahren nicht fest vorgegeben. Die Erfindung ist also bei allen kritischen Fahrsituationen anwendbar, in denen die Verdeckung eines Objekts in der Fahrzeugumgebung eine Rolle spielt.

Mittels des erfindungsgemäßen Verfahrens ist es also möglich, dass ein erstes Objekt in einer Umgebung des Kraftfahrzeugs, unabhängig davon, ob es sich in einem von der Erfassungseinrichtung des Kraftfahrzeugs erfassbaren Umgebung des Kraftfahrzeugs befindet oder nicht, dahin gehend überprüft wird, ob es eine potentielle Gefahr für das Kraftfahrzeug und die Insassen des Kraftfahrzeugs darstellt und ob es prinzipiell für einen Fahrer des Kraftfahrzeugs sichtbar ist oder ob es durch ein zweites Objekt verdeckt wird. Ausgehend von der Objektposition sowie von der Eigenposition des Kraftfahrzeugs wird somit die Sichtbarkeit eines Objekts für den Fahrer des Kraftfahrzeugs berechnet und dieser gegebenenfalls rechtzeitig über die Anwesenheit dieses Objekts informiert und davor gewarnt. Mit diesem Verfahren wird somit mittels des Warnsignals die Aufmerksamkeit des Fahrers des Kraftfahrzeugs auch auf solche potentiell kritischen Objekte gelenkt, die sich zeitweise dem Sichtbereich des Fahrers entziehen. Als Warnsignal kann beispielsweise mittels entsprechender Leuchtsignale die Aufmerksamkeit des Fahrers, sobald das erste Objekt nicht mehr verdeckt und somit für den Fahrer sichtbar ist, in die Richtung des erfassten ersten Objekts gelenkt werden. Dies ermöglicht zudem eine besonders hohe Sensitivität von Fahrzeugfunktionen zur Unterstützung und zum Assistieren eines Fahrers des Kraftfahrzeugs, indem auch für die Erfassungseinrichtungen des Kraftfahrzeugs sowie den Fahrer des Kraftfahrzeugs nicht sichtbare Objekte berücksichtigt werden. Mithilfe dieses Verfahrens können somit besonders frühzeitig reagierende Fahrerassistenzsysteme für Kraftfahrzeuge entwickelt werden.

Die Erfindung sieht vor, dass sich das erste Objekt hinter dem Kraftfahrzeug befindet und überprüft wird, ob bei einem Blick des Fahrers in einen Fahrzeugspiegel das erste Objekt vom zweiten Objekt verdeckt wird. Befindet sich das erste Objekt im rückwärtigen Bereich des Kraftfahrzeugs und kann daher nur durch einen Blick des Fahrers in den Rückspiegel und nicht durch einen Blick des Fahrers durch die Frontscheibe beziehungsweise mit den Frontsensoren selbst erfasst werden, ist das Verfahren auch dazu ausgelegt verdeckte Objekte hinter dem Kraftfahrzeug zu identifizieren und gegebenenfalls über eine sich dadurch ergebende potentiell kritische Situationen zu warnen. Das Verfahren ist somit für sich hinter dem Kraftfahrzeug befindende verdeckte Objekte ausgelegt. Dies ermöglicht einen die gesamte Fahrzeugumgebung abdeckenden Bereich, in dem nach verdeckten Objekten, durch die sich eine potentiell kritische Situation für das Kraftfahrzeug ergibt, Ausschau gehalten wird und gegebenenfalls vor diesen gewarnt wird.

Die Erfindung sieht vor, dass eine Sichtbarkeit des ersten Objekts auf dem Fahrzeugspiegel anhand der empfangenen Positionsdaten, vorbestimmten Abbildungseigenschaften des Fahrzeugspiegels, einer Positionseinstellung des Fahrzeugspiegels und einer von der Erfassungseinrichtung erfassten Augenposition und/oder Kopfposition des Fahrers des Kraftfahrzeugs ermittelt wird. Falls sich also das erste Objekt in einem rückwärtigen Raum des Kraftfahrzeugs befindet und für den Fahrer des Kraftfahrzeugs nur mithilfe des Fahrzeugspiegels sichtbar ist, wird ein potentieller Abbildungsbereich des ersten Objekts auf dem Fahrzeugspiegel bestimmt. Dieser Abbildungsbereich selbst wird anhand der im Kraftfahrzeug hinterlegten Eigenschaften des Fahrzeugspiegels selbst, anhand dessen Einstellung und somit Orientierung zum Fahrer sowie zum Kraftfahrzeug selbst sowie unter Berücksichtigung der Blickrichtung des Fahrers bestimmt. Falls zwischen diesem Abbildungsbereich im Fahrzeugspiegel und dem ersten Objekt ein das erste Objekt verdeckendes zweites Objekt erfasst wird und sich zusätzlich durch das verdeckte erste Objekt die potentiell kritische Situation für das Kraftfahrzeug ergibt, wird die erfindungsgemäß vorgegebene Warnkaskade eingeleitet.

Erfindungsgemäß ist es vorgesehen, dass falls das erste Objekt ein Fahrzeug ist, aktuelle Bewegungsdaten vom ersten Objekt empfangen werden, anhand der eine potentielle Bewegungstrajektorie des ersten Objekts ermittelt wird, und falls festgestellt wird, dass sich diese potentielle Bewegungstrajektorie mit einer potentiellen Eigenbewegungstrajektorie des Kraftfahrzeugs schneidet, dies als die sich ergebende potentiell kritische Situation erkannt wird. Mithilfe der aktuellen Bewegungsdaten des ersten Objekts liegen dem Kraftfahrzeug Informationen über eine aktuelle Fahrrichtung und Fahrgeschwindigkeit und beispielsweise eine aktuelle Fahrroute des ersten Objekts, bei dem es sich beispielsweise um das andere Fahrzeug, das mithilfe von Vehicle-to-X-Kommunikation seine Positionsdaten an das Kraftfahrzeug übermittelt, handelt, vor. Es ist also nicht nur die Position des ersten Objekts bekannt, sondern es kann auch dessen potentielle Bewegungstrajektorie abgeschätzt werden. Falls eine Kollisionsgefahr zwischen dem ersten Objekt und dem Kraftfahrzeug festgestellt wird, kann somit ermittelt werden, ob sich durch das erste Objekt eine potentiell kritische Situation für das Kraftfahrzeug ergibt, bei der es sich also beispielsweise um die Kollision des ersten Objekts mit dem Kraftfahrzeug handelt. Die potentielle Eigenbewegungstrajektorie des Kraftfahrzeugs kann beispielsweise anhand einer Fahrroute des Navigationsgeräts ermittelt werden, oder alternativ dazu aus dem aktuellen Fahrverhalten abgeleitet werden. Hierbei wird die aktuelle Fahrgeschwindigkeit und Fahrrichtung berücksichtigt. Zudem kann die Eigenbewegungstrajektorie mithilfe der Erfassung des Fahrers mittels Innenraumsensoren unterstützt werden: Beispielsweise wird durch einen Schulterblick ein mögliches Überholverfahren oder ein möglicher Spurwechsel des Kraftfahrzeugs angezeigt. Zudem können in der Speichereinheit hinterlegte typische Fahrrouten berücksichtigt werden, das Setzen eines Blinkers, Geschwindigkeitsveränderungen wie beispielsweise ein Abbremsen vor einem Abbiegen oder Gestenerkennungsverfahren, anhand derer beispielsweise Intentionen des Fahrers ablesbar sind, angewendet werden. Bei diesen Gesten kann es sich beispielsweise um den bereits genannten Schulterblick, einen Blick in den Rückspiegel oder eine Kopfdrehbewegung handeln. Unter Berücksichtigung der potentiellen Bewegungstrajektorie des ersten Objekts sowie der Eigenbewegungstrajektorie, wobei für beide Trajektorien gegebenenfalls mehrere potentielle Trajektorien angenommen werden können, kann somit besonders zuverlässig vor der potentiell kritischen Situation gewarnt werden. Mehrere potentielle Trajektorien ergeben sich beispielsweise durch Geschwindigkeitsvariationen des Fahrers des anderen Fahrzeugs und/oder des Kraftfahrzeugs, Abzweigungen zwischen den aktuellen Positionen und dem Ort der potentiellen Kollision oder Einflüsse anderer Verkehrsteilnehmer, wie beispielsweise vor dem anderen Fahrzeug oder dem Kraftfahrzeug fahrenden weiteren Fahrzeugen. Insbesondere wenn mehrere potentielle Bewegungstrajektorien und potentielle Eigenbewegungstrajektorien bestimmt und berücksichtigt werden, kann dadurch ein besonders zuverlässiges Unterstützen des Fahrers des Kraftfahrzeugs im Falle von einem verdeckten ersten Objekt, durch dass sich die potentiell kritische Situation ergibt, gewährleistet werden.

Erfindungsgemäß ist es alternativ oder zusätzlich vorgesehen, dass zum Überprüfen, ob sich durch das erste Objekt die potentiell kritische Situation für das Kraftfahrzeug ergibt, ein ein von dem ersten Objekt ausgehendes Gefahrenpotential beziffernder Objektkritikalitätswert sowie ein das von einer potentiellen Verkehrssituation ausgehende Gefahrenpotential beziffernder Situationskritikalitätswert ermittelt werden, anhand welcher die potentiell kritische Situation bewertet wird. Welche Stufe der Warnkaskade, das heißt, welche Art von Warnung bei einer potentiell kritischen Situation ausgegeben wird, hängt somit von zwei Kritikalitätswerten ab. Mithilfe des so genannten Objektkritikalitätswerts wird berücksichtigt, wohin und beispielsweise wie schnell sich das erste Objekt bewegt. Hierbei wird beispielsweise berücksichtigt, ob sich das andere Fahrzeug, das als erstes Objekt seine Positionsdaten an das Kraftfahrzeug übermittelt, von dem Kraftfahrzeug selbst wegbewegt oder ob es beispielsweise sehr langsam auf dieses zufährt. In diesen beiden Situationen würde sich jeweils ein sehr geringer Objektkritikalitätswert ergeben. Ein parkendes Fahrzeug, das seine Positionsdaten an das Kraftfahrzeug übermittelt, hätte beispielsweise einen Objektkritikalitätswert von beinahe null, da eine Kollision mit dem parkenden Fahrzeug in der Regel ausgeschlossen werden kann, falls dieses parkende Fahrzeug sich nicht plötzlich in Bewegung versetzt und auf das Kraftfahrzeug zufährt. Ein Fahrzeug, das sich mit relativ hoher Geschwindigkeit auf eine Kreuzung zubewegt, auf die sich auch das Kraftfahrzeug selbst zubewegt, hätte demgegenüber einen besonders hohen Objektkritikalitätswert, der in die Bewertung der Gesamtsituation einfließen wird.

Die Situationskritikalität berücksichtigt beispielsweise die geltenden Verkehrsregeln und bestimmt somit Kritikalitätswerte abhängig davon, auf welcher Fahrspur sich das Kraftfahrzeug bewegt, ob es sich bei dem verdeckten ersten Objekt um eine Ampelanlage oder eine andere verkehrssicherheitsrelevante Einrichtung handelt, und schätzt somit die Kritikalität des durch die Anwesenheit des verdeckten ersten Objekts für das Kraftfahrzeug entstehenden Gefahrenpotentials bezogen auf die Situation ab. Eine Ampelanlage an einer Kreuzung würde beispielsweise die Situationskritikalität an der Kreuzung erniedrigen, da durch die Ampelanlage eindeutige Signale sowohl an das sich nähernde Kraftfahrzeug als auch beispielsweise an ein anderes sich näherndes Fahrzeug ausgesendet werden. Die Situationskritikalität bei einer potentiellen Kollision des Kraftfahrzeugs mit dem anderen Fahrzeug an einer Kreuzung ohne Ampel, an der beispielsweise die "rechts vor links"-Regel oder die Regeln einer Vorfahrtsstraße gelten, würde demgegenüber mit einer höheren Situationskritikalität bewertet werden, da an einer derartigen Kreuzung generell ein höheres Gefahrenpotential für die Insassen des Kraftfahrzeugs als auch die Insassen des anderen Fahrzeugs besteht. Falls sich mehrere Objekte in der Fahrzeugumgebung befinden, wird das Gefahrenpotential der Gesamtsituation bewertet und als Situationskritikalitätswert angegeben.

Letztendlich kann durch Berücksichtigung der Gefahrenpotentiale, die mit dem Objektkritikalitätswert und dem Situationskritikalitätswert beziffert werden können, ein besonders sinnvoll auf das tatsächlich zu erwartende Gefahrenpotential der potentiell kritischen Situation bestimmt werden und die Warnkaskade entsprechend angepasst und gewählt werden. Hierdurch wird beispielsweise vermieden, dass eine unnötig aufdringliche Warnung an den Fahrer des Kraftfahrzeugs ausgegeben wird, obwohl durch die potentiell kritische Situation trotz Verdeckung des ersten Objekts nur ein relativ geringes Gefahrenpotential für die Insassen des Kraftfahrzeugs gegeben ist.

In einer weiteren vorteilhaften Ausgestaltung der Erfindung ist es vorgesehen, dass das Kraftfahrzeug nur Positionsdaten von der fahrzeugexternen Kommunikationseinrichtung empfängt, wenn sich diese und/oder das erste Objekt innerhalb eines vorgegebenen Umkreises des Kraftfahrzeugs befindet. Es werden somit von dem Kraftfahrzeug nicht Positionsdaten eines ersten Objekts empfangen, dass sich beispielsweise mehrere Kilometer entfernt vom Kraftfahrzeug selbst aufhält. Durch die Wahl des vorgegebenen Umfelds des Kraftfahrzeugs, in dessen Reichweite Positionsdaten von Objekten empfangen werden, wird somit ausgeschlossen, dass für das Kraftfahrzeug nicht relevante Objekte, die beispielsweise zu weit vom Kraftfahrzeug entfernt ihren Aufenthaltsort haben, vom Kraftfahrzeug empfangen werden. Dies stellt eine besonders sinnvolle Einschränkung der vom Kraftfahrzeug empfangenen Datenmengen dar, da nur die tatsächlich für das Kraftfahrzeug relevanten Daten empfangen werden. Der vorgegebene Umkreis kann sich nur auf die Kommunikationseinrichtung, von der die Positionsdaten gesendet werden, beziehen. Beispielsweise kann es sich bei dieser um eine Infrastruktureinrichtung wie eine Ampelanlage handeln. Lediglich wenn sich die Ampelanlage innerhalb des vorgegebenen Umkreises des Kraftfahrzeugs befindet, sind Informationen, beispielsweise über anstehende Rotphasen dieser Ampelanlage, für die Bestimmung der potentiell kritischen Situationen durch diese Ampelanlage für das Kraftfahrzeug relevant. Zudem ist es möglich, dass zwar die Kommunikationseinrichtung, die die Positionsdaten versendet, sich außerhalb des vorgegebenen Umkreises des Kraftfahrzeugs befindet, jedoch das von der Kommunikationseinrichtung erfasste erste Objekt sich innerhalb des vorgegebenen Umkreises des Kraftfahrzeugs befindet. Hiermit ist beispielsweise die Situation abgedeckt, dass eine Infrastruktureinrichtung wie beispielsweise eine Ampelanlage einen Fahrradfahrer detektiert, und Positionsdaten dieses Fahrradfahrers an das Kraftfahrzeug übermittelt. Falls sich diese Ampelanlage außerhalb des Umkreises befindet, aber beispielsweise der Fahrradfahrer in Richtung des Kraftfahrzeugs selbst fährt und bereits im Radius im Umkreis des Kraftfahrzeugs angelangt ist, werden die entsprechenden Positionsdaten dennoch von der Infrastruktureinrichtung an das Kraftfahrzeug übermittelt. Letztendlich wird also sichergestellt, dass alle für das Kraftfahrzeug relevanten Daten auch tatsächlich an dieses übermittelt werden.

In einer weiteren vorteilhaften Ausgestaltung der Erfindung ist es vorgesehen, dass ein anderes Fahrzeug oder eine Infrastruktureinheit die fahrzeugexterne Kommunikationseinrichtung umfasst und das erste Objekt ist. Es ist somit vorgesehen, dass es sich bei dem ersten Objekt um ein anderes Fahrzeug, wie beispielsweise ein anderes Kraftfahrzeug, oder eine Infrastruktureinheit, wie beispielsweise eine Ampelanlage oder ein eine Außenkamera umfassendes Gebäude, handelt. Dieses Objekt, das heißt das andere Kraftfahrzeug oder die Ampelanlage übermitteln selbst mithilfe von Vehicle-to-X-, Car-to-X- oder Car-to-Car-Kommunikation ihre eigenen Positionsdaten an eine entsprechende Kommunikationseinrichtung des Kraftfahrzeugs. Hierdurch wird ermöglicht, dass andere Fahrzeuge oder Infrastruktureinheiten selbstständig und ohne Anforderung oder Aktivierung durch ein weiteres Objekt ihre Positionsdaten an das Kraftfahrzeug übermitteln, damit basierend auf diesen Daten letztendlich ein Warnen des Fahrers des Kraftfahrzeugs erfolgen kann, falls dieses andere Fahrzeug oder die Infrastruktureinheit für das Kraftfahrzeug verdeckt ist und aufgrund dieses sogenannten ersten Objekts eine potentiell kritische Situation besteht.

Gemäß einer weiteren Ausgestaltungsform ist es zudem vorgesehen, dass ein anderes Fahrzeug oder eine Infrastruktureinheit die fahrzeugexterne Kommunikationseinrichtung umfasst, mit einer Sensoreinheit das erste Objekt erfasst und die Positionsdaten dieses erfassten ersten Objekts vom Kraftfahrzeug empfangen werden. Es ist also zudem möglich, dass das erste Objekt nicht die Einrichtung ist, die die Positionsdaten des ersten Objekts an das Kraftfahrzeug übermittelt. Es kann sich also bei dem ersten Objekt beispielsweise um ein weiteres Fahrzeug oder eine weitere Infrastruktureinheit handeln, die von einem Sensor, wie beispielsweise einer Frontkamera des anderen Fahrzeugs oder einer Außenkamera der Infrastruktureinheit, erfasst wird. Die Positionsdaten des derart erfassten Objekts werden daraufhin mittels beispielsweise Vehicle-to-X-, Car-to-X- oder Car-to-Car-Kommunikation an das Kraftfahrzeug übermittelt. Hierdurch ist es möglich, dass nicht nur Fahrzeuge oder Infrastruktureinheiten, die über eigene Kommunikationseinrichtungen zum Aussenden von Positionsdaten verfügen, als erste Objekte erfasst werden können, sondern auch andere Objekte, wie beispielsweise Fahrräder oder Fahrzeuge ohne Vehicle-to-X-Kommunikationsmöglichkeiten im Rahmen des Verfahrens berücksichtigt werden können.

Eine weitere Ausgestaltungsform der Erfindung sieht vor, dass anhand von Kartendaten, insbesondere 3D-Kartendaten, überprüft wird, ob sich im Sichtbereich zwischen dem Kraftfahrzeug und dem ersten Objekt das zweite Objekt, das das erste Objekt verdeckt, befindet. Im Kraftfahrzeug können somit Kartendaten hinterlegt sein, in denen beispielsweise Waldgebiete eingezeichnet sind. Alternativ oder zusätzlich zu den von der Erfassungseinrichtung erfassten Fahrzeugumgebungsdaten kann basierend auf diesen Kartendaten darauf geschlossen werden, ob sich ein das erste Objekt verdeckendes zweites Objekt zwischen dem Kraftfahrzeug und dem ersten Objekt befindet. Besonders vorteilhaft sind hierbei Kartendaten mit Topografieinformationen, anhand derer beispielsweise die Höhe eines Hügels abgeschätzt werden kann. Hierdurch ist besonders eindeutig bestimmbar, ob der Sichtbereich zwischen dem Kraftfahrzeug und dem ersten Objekt durch das zweite Objekt, in dieser Situation durch den Hügel, tatsächlich verdeckt ist, oder ob das erste Objekt trotzdem vom Kraftfahrzeug aus zu sehen ist, beispielsweise im Falle eines relativ niedrigen Hügels oder eines relativ hohen Kraftfahrzeugs, und lediglich außerhalb des Erfassungsbereichs der Erfassungseinrichtung liegt. Beim Bestimmen der Verdeckung des ersten Objekts durch das zweite Objekt wird also eine Ausdehnung der Objekte sowie des Kraftfahrzeugs berücksichtigt, das heißt deren Höhe, Länge und/oder Breite.

Die Verdeckung des ersten Objekts kann also auf verschiedene Arten erkannt werden. Zum einen kann erkannt werden, dass das erste Objekt im Sichtbereich des Kraftfahrzeugs nicht sichtbar ist, das heißt, das erste Objekt wird von der Erfassungseinrichtung nicht als erstes Objekt erkannt und/oder es wird ein zweites Objekt erfasst, dass das erste Objekt verdeckt. Zum anderen kann die Verdeckung eines ersten Objekts bereits beim Übermitteln der Positionsdaten an das Kraftfahrzeug, beispielsweise mittels Vehicle-to-X-Kommunikation, bekannt sein. Dies ist zum Beispiel der Fall, wenn das erste Objekt von der Sensoreinheit eines anderen Fahrzeugs erfasst wird. Bei diesen beiden Arten des Erkennens der Verdeckung werden dynamische Verdeckungen des ersten Objekts erkannt, die häufig abhängig von der Bewegung des ersten Objekts sind. Zudem können statische Verdeckungen des ersten Objekts erkannt werden, wie es beispielsweise mittels Kartendaten möglich ist, die Informationen über einen Landschafts- und Vegetationsverlauf enthalten, das heißt beispielsweise Informationen über die Positionen von Hügeln, Häusern und Vegetation aufweisen.

In einer weiteren vorteilhaften Ausgestaltungsform der Erfindung ist es vorgesehen, dass beim Bestimmen des Sichtbereichs zusätzlich zu den empfangenen Positionsdaten und der Eigenposition mittels der Erfassungseinrichtung eine Blickrichtung des Fahrers des Kraftfahrzeugs berücksichtigt und überprüft wird, ob ausgehend von einem Blickursprung entlang der Blickrichtung zwischen dem Fahrer und dem ersten Objekt ein das erste Objekt verdeckendes Bauteil des Kraftfahrzeugs erfasst wird. Der Sichtbereich des Kraftfahrzeugs zwischen dem Kraftfahrzeug und dem ersten Objekt kann somit näher spezifiziert werden. Hierfür wird die Blickrichtung des Fahrers berücksichtigt, die beispielsweise mithilfe einer Innenraumkamera, die eine Augenposition sowie eine Kopfposition des Fahrers des Kraftfahrzeugs erfasst, bestimmbar ist. Der Blickursprung ist also als die Position der Augen des Fahrers definiert. Hierdurch ergibt sich nun ein eingeschränkterer Sichtbereich als lediglich der Sichtbereich zwischen dem Kraftfahrzeug und dem ersten Objekt, wodurch die tatsächliche Sichtbarkeit des ersten Objekts und somit die tatsächliche Verdeckung durch das zweite Objekt besonders genau bestimmbar ist. Zudem ist hiermit erfassbar, ob das erste Objekt zusätzlich oder anstelle eines außerhalb des Kraftfahrzeugs befindlichen zweiten Objekts auch durch eine Komponente des Kraftfahrzeugs selbst verdeckt wird. Bei diesem das erste Objekt verdeckenden Bauteil des Kraftfahrzeugs kann es sich beispielsweise um die A-Säule, zwischen linkem Seitenfenster und Frontscheibe des Kraftfahrzeugs, oder einen Rückspiegel, der im oberen Bereich der Frontscheibe angeordnet ist, handeln. Die vorgegebene Warnkaskade kann somit auch dann eingeleitet werden, wenn das erste Objekt aufgrund von einem Bauteil des Kraftfahrzeugs verdeckt wird und sich durch dieses erste Objekt eine potentiell kritische Situation für das Kraftfahrzeug ergibt.

Zur Bestimmung der Blickrichtung kann bereits ohne Zugriff auf Daten der Innenraumkamera ein Wahrnehmungsbereich des Fahrers bestimmt werden, indem beispielsweise ein Kopfhöhenbereich anhand einer eingestellten Fahrersitzposition des Fahrers abgeschätzt wird. Da die aktuelle Kopfposition und Kopfrotation sowie genaue Blickrichtung des Fahrers hierbei unbekannt sind, wird ein potentieller Wahrnehmungsbereich von bis zu 360 Grad angenommen, der somit auch einen Schulterblick des Fahrers umfasst. Besteht Zugriff auf Daten des Fahrzeuginnenraums, beispielsweise durch eine Innenraumkamera kann dieser Wahrnehmungsbereich eingeschränkt und spezifiziert werden, indem der Bereich der aktuellen visuellen Aufmerksamkeit des Fahrers ermittelt wird. Hierfür kann anhand der von der Innenraumkamera erkannten Kopfposition und Kopfrotation der Aufmerksamkeitsbereich des Fahrers abgeschätzt werden. Eine genaue Messung des Aufmerksamkeitsbereiches kann durch die vorhandene Erfassungseinrichtung durch die Erkennung der aktuellen Blickrichtung vorgenommen werden. Der Wahrnehmungsbereich des Fahrers kann also abhängig von der Erfassungseinrichtung des Kraftfahrzeugs unterschiedlich genau bestimmt werden.

In einer nicht beanspruchten Ausgestaltungsform ist es vorgesehen, dass falls erkannt wird, dass sich durch das erste Objekt die potentiell kritische Situation für das Kraftfahrzeug ergibt, das erste Objekt jedoch nicht verdeckt ist, nur falls festgestellt wird, dass die Blickrichtung des Fahrers nicht auf das unverdeckte erste Objekt gerichtet ist, die vorgegebene Warnkaskade eingeleitet wird. Wird also beispielsweise mithilfe Innenkameras bestimmt, dass sich aus der Augenposition und der Kopfposition des Fahrers schließen lässt, dass der Fahrer das erste Objekt, obwohl es eigentlich für ihn sichtbar ist, da es nicht verdeckt ist, nicht gesehen hat, jedoch festgestellt wird, dass sich durch dieses erste Objekt die potentiell kritische Situation für das Kraftfahrzeug ergibt, wird trotzdem die vorgegebene Warnkaskade, die im Rahmen des erfindungsgemäßen Verfahrens vorgesehen ist, eingeleitet.

Zusätzlich oder alternativ zur reinen Blickrichtung des Fahrers kann auch dessen visuelle Aufmerksamkeit, das heißt eine Wahrnehmungswahrscheinlichkeit des ersten Objekts, bestimmt werden, mit der der Fahrer das erste Objekt tatsächlich wahrgenommen hat. Hierfür werden Eigenschaften des Fahrers und der Fahrzeugumgebung, insbesondere des ersten Objekts, wie dessen Farbe und Oberflächenbeschaffenheit, berücksichtigt und überprüft, ob der Fahrer sich des Objektes und seiner Relevanz bewusst ist. Dies ist besonders für seitlich des Kraftfahrzeugs angeordnete erste Objekte relevant, da diese möglicherweise nicht direkt vom Fahrer gesehen oder wahrgenommen werden, zwar prinzipiell für ihn zu sehen sind, aber eine Warnung über die Anwesenheit und die Bewegung dieses ersten Objekts dennoch zum Verhindern einer Kollision mit diesem ersten seitlichen Objekt sinnvoll ist.

Zudem oder alternativ dazu kann die Wahrnehmungswahrscheinlichkeit, das heißt die visuelle Aufmerksamkeit des Fahrers, bei der Bewertung der potentiell kritischen Situation berücksichtigt werden. Ein in einer relativ auffallenden Farbe lackiertes anderes Fahrzeug, beispielsweise ein rotes Kraftfahrzeug, wird beispielsweise eher vom Fahrer wahrgenommen als ein dunkelgrünes Kraftfahrzeug. Ergibt sich die potentiell kritische Situation aufgrund des dunkelgrünen Kraftfahrzeugs kann beispielsweise ein stärkeres Warnsignal beim Einleiten der Warnkaskade aktiviert werden, als es bei der gleichen Situation aufgrund des roten Kraftfahrzeugs der Fall wäre, da der Fahrer, sobald das Kraftfahrzeug in seinen Sichtbereich fährt, das rote Kraftfahrzeug mit höherer Wahrscheinlichkeit sowie zeitnaher wahrnehmen wird als das dunkelgrüne Kraftfahrzeug.

Eine weitere, nicht beanspruchte Ausgestaltungsform sieht vor, dass falls festgestellt wird, dass der Fahrer das erste Objekt aufgrund der erfassten Blickrichtung nicht sieht, für einen vorgegebenen vergangenen Zeitraum die mittels der Erfassungseinrichtung erfasste Blickrichtung des Fahrers des Kraftfahrzeugs ausgewertet wird und falls festgestellt wird, dass der Fahrer das erste Objekt in dem Zeitraum nicht gesehen hat, die vorgegebene Warnkaskade eingeleitet wird. Es wird also nicht lediglich dann, wenn der Fahrer zu einem bestimmten Zeitpunkt aufgrund seiner Blickrichtung das nicht verdeckte erste Objekt nicht sieht, die Warnkaskade eingeleitet, sondern zunächst überprüft, ob er das entsprechende erste Objekt auch in einem vorgegebenen Zeitraum, beispielsweise innerhalb der letzten zehn Sekunden oder innerhalb der letzten Minuten, nicht gesehen hat. Erst falls, wie auf diese Art feststellbar, sichergestellt ist, dass der Fahrer das erste Objekt tatsächlich bisher nicht gesehen hat, wird die vorgegebene Warnkaskade eingeleitet. Hierdurch kann vermieden werden, dass wiederholte und nur aufgrund einer aktuellen Blickrichtung des Fahrers des Kraftfahrzeugs ausgelöste und daher weder nötige noch sinnvolle Warnkaskaden eingeleitet werden.

Alternativ oder zusätzlich dazu, kann anstelle der Blickrichtung des Fahrers dessen visuelle Aufmerksamkeit, das heißt die Wahrnehmungswahrscheinlichkeit, mit der er das erste Objekt wahrgenommen hat, berücksichtigt werden. Falls also festgestellt wird, dass der Fahrer das erste Objekt aufgrund der erfassten Blickrichtung und/oder der erfassten visuellen Aufmerksamkeit nicht wahrnimmt, für einen vorgegebenen vergangenen Zeitraum die mittels der Erfassungseinrichtung erfasste visuellen Aufmerksamkeit des Fahrers des Kraftfahrzeugs ausgewertet wird und falls festgestellt wird, dass der Fahrer das erste Objekt in dem Zeitraum nicht wahrgenommen hat, die vorgegebene Warnkaskade eingeleitet wird. Es wird also abgeschätzt, wie bewusst dem Fahrer das Objekt aktuell ist. Das Einleiten der Warnkaskade ist beispielsweise auch dann sinnvoll, wenn der Fahrer das erste Objekt zwar in dem vorgegebenen Zeitraum gesehen hat, dieses Objekt aber zwischenzeitlich relativ stark beschleunigt wurde und sich aus diesem Grund nun eine potentiell kritische Situation aufgrund dieses Objekts gibt. Da der Fahrer diese Beschleunigung des ersten Objekts nicht gesehen hat, das heißt diesbezüglich ein Informationsdefizit aufweist, kann die Warnkaskade dennoch eingeleitet werden. Analog dazu kann die Warnkaskade eingeleitet werden, wenn es sich bei dem zweiten Objekt beispielsweise um ein bereits zuvor vom Fahrer gesichtetes Fahrrad handelt, das seine Fahrrichtung ändert während es für den Fahrer verdeckt ist. Auch über bereits vom Fahrer gesichtete Objekte, deren Anwesenheit er jedoch womöglich inzwischen wieder vergessen hat, beispielsweise aufgrund eines Halts vor einer Ampelanlage, während dessen das Objekt verdeckt ist, kann der Fahrer mithilfe der Warnkaskade gewarnt werden.

Eine weitere Ausgestaltungsform der Erfindung sieht vor, dass falls die vorgegebene Warnkaskade bis zu einem Ende der Warnkaskade durchgeführt wird, zum Vermeiden des Sichergebens der potentiell kritischen Situation ein automatischer Notstopp des Kraftfahrzeugs durchgeführt wird. Im Rahmen der Warnkaskade ist es insbesondere im kritischen Bereich, das heißt in dem Bereich kurz vor dem Ort und Zeitpunkt des Eintretens der potentiell kritischen Situation, möglich, dass das Kraftfahrzeug ohne ein Reagieren des Fahrers des Kraftfahrzeugs auf die Warnkaskade zum Anhalten gebracht wird. Das heißt mithilfe der Bremsen des Kraftfahrzeugs, die beispielsweise elektronisch und somit mithilfe einer Brake-by-Wire-Technik ansteuerbar sind, kann das Kraftfahrzeug in den Stillstand abgebremst werden. Alternativ oder zusätzlich zum automatischen Notstopp kann ein autonomer Eingriff, wie beispielsweise ein Ausweichmanöver, durchgeführt werden, um eine Kollision mit dem ersten Objekt zu verhindern. Auch wenn der Fahrer des Kraftfahrzeugs nicht auf die eingeleitete Warnkaskade reagiert, kann somit die potentiell kritische Situation kurz vor ihrem Eintreten automatisch im Rahmen des Verfahrens verhindert werden. Hierbei kann alternativ oder zusätzlich dazu anhand der Fahrerbeobachtung mit der Innenraumkamera des Kraftfahrzeugs die Reaktionszeit des Fahrers abgeschätzt und bei der Wahl des Warnsignals berücksichtigt werden. Ist der Fahrer beispielsweise aktuell abgelenkt, weil er eine neues Fahrziel in ein Navigationsgerät des Kraftfahrzeugs eingibt, verzögert sich die Reaktionszeit des Fahrers und es kann gegebenenfalls der automatische Notstopp des Kraftfahrzeugs früher als bei einem aufmerksamen Fahrer erfolgen.

Zusätzlich oder alternativ dazu kann beim Einleiten der Warnkaskade berücksichtigt werden, wie lange ein Blickrichtungswechsel und/oder Wahrnehmen des bisher verdeckten ersten Objekts dauern wird, sobald dieses für den Fahrer potentiell sichtbar ist beziehungsweise dessen Aufmerksamkeit durch die Warnkaskade auf das bereits sichtbar gewesene Objekt gelenkt wird. Hierfür wird eine Wahrnehmungsverzögerung des Fahrers abgeschätzt und die Warnkaskade unter Berücksichtigung dieser Wahrnehmungsverzögerung besonders frühzeitig eingeleitet, damit zu einem gewünschten Zeitpunkt, abhängig von der aktuellen Bewegungstrajektorie des Kraftfahrzeugs sowie des ersten Objekts, der Fahrer das erste Objekt erblicken und wahrnehmen kann.

Zum Bestimmen der Wahrnehmungsverzögerung des Fahrers wird beispielsweise ein Verhalten des Fahrers mittels der Erfassungseinrichtung und/oder nicht von der Erfassungseinrichtung des Kraftfahrzeugs umfassten Vorrichtungen, wie beispielsweise eines Fitnessarmbands des Fahrers, erfasst und einer Fahrerverfassung zugeordnet. Anhand des Fahrverhaltens des Fahrers, wie es zum Beispiel anhand des Brems- und Beschleunigungsverhaltens erfassbar ist, anhand einer mit Innenraumsensoren erfassten Augenlidschlagfrequenz des Fahrers oder anhand der mit dem Fitnessarmband gemessenen Herzschlagfrequenz des Fahrers kann festgestellt werden, in welcher Verfassung sich der Fahrer aktuell befindet. Hierbei können zum Beispiel folgende Fahrerverfassungen unterschieden werden: müde, unterfordert und überfordert. Des Weiteren kann der Fahrer einem Fahrertyp zugeordnet werden, wie beispielsweise einem der folgenden Fahrertypen: Fahranfänger, erfahrener Fahrer, sportlicher Fahrer und vorsichtiger Fahrer. Zur Bestimmung des Fahrertyps können zum Beispiel personenspezifische Daten im Kraftfahrzeug hinterlegt sein oder bereits vergangene vom Fahrer durchgeführte Fahrten mit dem Kraftfahrzeug diesbezüglich ausgewertet werden. Je nachdem welcher Fahrertyp bestimmt sowie welche Fahrerverfassung dem Fahrer zugeordnet wird, das heißt in welchem kognitiven Zustand sich der Fahrer befindet, wird eine zum Beispiel basierend auf Flottendaten ermittelte typische Wahrnehmungsverzögerung ausgewählt. Wird nun beispielsweise aufgrund des Einleitens der Warnkaskade eine Leuchtvorrichtung im Fahrzeuginneren aktiviert, die mittels auf der Anzeigeeinrichtung des Kraftfahrzeugs angezeigten Leuchten die Aufmerksamkeit des Fahrers in die Richtung lenken soll, in der das bisher verdeckte, nicht gesehene oder nicht wahrgenommene erste Objekt zu sehen sein wird oder zu sehen ist, können diese Leuchten abgestimmt auf den Fahrer besonders effizient als Warnsignale aktiviert werden, da bei der Bestimmung des Zeitpunkts der Aktivierung die Wahrnehmungsverzögerung berücksichtigt wird. Die Wahrnehmungsverzögerung kann zudem fahrerspezifisch basierend auf einer Auswertung der bei vergangenen Fahrten des Fahrers mit dem Kraftfahrzeug beobachteten Wahrnehmungsverzögerungen angepasst und somit personifiziert werden.

Auch falls sich durch das erste Objekt zwar eine potentiell kritische Situation für das Kraftfahrzeug ergibt, dieses erste Objekt jedoch nicht durch ein zweites Objekt verdeckt wird, jedoch mithilfe der Innenraumsensoren die Blickrichtung des Fahrers derart erfasst wurde, dass davon ausgegangen werden kann, dass dieser weder in diesem Augenblick noch innerhalb eines bereits vergangenen Zeitraums derart in den Fahrzeugspiegel geblickt hat, dass er auf den ermittelten Abbildungsbereich geblickt hat und somit davon ausgegangen werden kann, dass er das erste Objekt im rückwärtigen Raum des Kraftfahrzeugs nicht gesehen hat, kann dennoch die vorgegebene Warnkaskade eingeleitet werden. Es kann somit genau nachvollzogen werden, ob ein sich hinter dem Kraftfahrzeug befindendes erstes Objekt im Spiegel sichtbar ist beziehungsweise war, wenn der Fahrer in diesen schaut beziehungsweise geschaut hat. Hierbei kann zudem oder alternativ dazu berücksichtigt werden, ob das erste Objekt in einem digitalen Spiegel, der mit einer Heckkamera des Kraftfahrzeugs aufgenommene Aufnahmen der rückseitigen Fahrzeugumgebung auf einer Anzeigeeinrichtung im Kraftfahrzeug anzeigt, vom Fahrer gesehen und wahrgenommen wurde. Hierdurch können beispielsweise Blindspotwarnungen an den Fahrer besonders spezifisch und zudem unter Berücksichtigung von erfassten Verdeckungen des ersten Objekts erfolgen.

Erfindungsgemäß ist zudem eine Steuervorrichtung für ein Kraftfahrzeug zum Warnen eines Fahrers des Kraftfahrzeugs nach Anspruch 8.

Erfindungsgemäß ist zudem ein Kraftfahrzeug mit der beschriebenen Steuervorrichtung vorgesehen, mit dem also das beschriebene Verfahren zum Warnen eines Fahrers eines Kraftfahrzeugs durchführbar ist.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung eines Kraftfahrzeugs, in dessen Umkreis sich ein durch ein zweites Objekt verdecktes erstes Objekt befindet, wobei diese Darstellung nicht der Situation der beanspruchten Erfindung entspricht; und
- Fig. 2: eine schematische Darstellung eines Kraftfahrzeugs, hinter dem sich ein verdecktes erstes Objekt befindet, wobei diese Situation die beanspruchte Erfindung darstellt.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

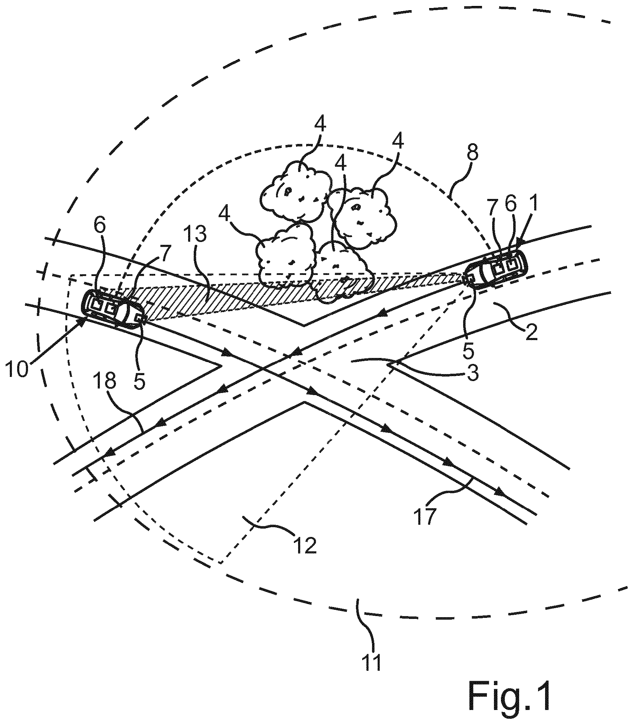

In Fig. 1 ist ein Kraftfahrzeug 1 skizziert, das sich auf einer Straße 2 in Richtung einer Kreuzung 3 bewegt. Rechts des Kraftfahrzeugs 1 befindet sich ein Wald bestehend aus zahlreichen Bäumen 4. Der Kreuzung 3 nähert sich zudem ein anderes Fahrzeug 10. Das Kraftfahrzeug 1 sowie das andere Fahrzeug 10 verfügen jeweils über eine Steuervorrichtung 6, eine Kommunikationseinrichtung 7 sowie eine Erfassungseinrichtung 5, bei der es sich beispielsweise um eine Frontkamera oder ein im Frontbereich des Kraftfahrzeugs 1 angeordnetes Lidar-Gerät handelt. Über eine Kommunikationsverbindung 8 zwischen der Kommunikationseinrichtung 7 des anderen Fahrzeugs 10 und der Kommunikationseinrichtung 7 des Kraftfahrzeugs 1 empfängt das Kraftfahrzeug 1 Positionsdaten des anderen Fahrzeugs 10. Das andere Fahrzeug 10 stellt somit ein erstes Objekt 10 dar, dessen Positionsdaten von dem Kraftfahrzeug 1 empfangen werden. Mithilfe der Kommunikationsverbindung 8 werden somit beispielsweise unter Verwendung von Vehicle-to-X-, Car-to-X- oder Car-to-Car-Kommunikation Daten von dem anderen Fahrzeug 10 für das Kraftfahrzeug 1 bereitgestellt.

Das andere Fahrzeug 10 befindet sich innerhalb eines vorgegebenen Umkreises 11 des Kraftfahrzeugs 1 und typischerweise zudem innerhalb eines Erfassungsbereichs 12 der Erfassungseinrichtung 5 des Kraftfahrzeugs 1. In der Steuervorrichtung 6 wird nun, nachdem die Positionsdaten des anderen Fahrzeugs 10 empfangen wurden, basierend auf den vom anderen Fahrzeug 10 empfangenen Positionsdaten des anderen Fahrzeugs 10 und der vom Kraftfahrzeug 1 selbst erfassten Eigenposition des Kraftfahrzeugs 1, ein Sichtbereich 13 des Kraftfahrzeugs 1 auf das andere Fahrzeug 10 bestimmt. Mithilfe der Erfassungseinrichtung 5 wird zudem eine Fahrzeugumgebung des Kraftfahrzeugs 1 erfasst. Falls nun von der Erfassungseinrichtung 5 in dem ermittelten Sichtbereich 13 das andere Fahrzeug 10 nicht identifiziert und/oder ein zweites Objekt 4 erfasst wird, das zwischen dem Kraftfahrzeug 1 und dem anderen Fahrzeug 10 angeordnet ist, wird das andere Fahrzeug 10 als verdeckt identifiziert. Bei diesem zweiten Objekt 4 handelt es sich hier um die Bäume 4, die die direkte Sicht des Kraftfahrzeugs 1 auf das andere Fahrzeug 10 verdecken.

Es wird zudem überprüft, ob sich durch das andere Fahrzeug 10 eine potentiell kritische Situation für das Kraftfahrzeug 1 ergibt, beispielsweise die Gefahr einer Kollision beim Eintreffen beider Fahrzeuge, das heißt des Kraftfahrzeugs 1 sowie des anderen Fahrzeugs 10 zu einem gleichen potentiellen Zeitpunkt im Bereich der Kreuzung 3. Falls erkannt wird, dass das andere Fahrzeug 10 verdeckt ist und sich eine potentiell kritische Situation für das Kraftfahrzeug 1 durch das andere Fahrzeug 10 ergibt, wird eine vorgegebene Warnkaskade eingeleitet. Diese sieht beispielsweise verschieden abgestufte, je nach Nähe zum Ort der potentiellen Kollision zwischen dem anderen Fahrzeug 10 und dem Kraftfahrzeug 1 unterschiedlich stark gewählte Warnungen vor. Diese Warnungen können beispielsweise eine entsprechende Anzeige auf einer Anzeigefläche im Fahrzeuginneren des Kraftfahrzeugs 1, akustische Ton- oder Sprachausgaben sowie einen Notstopp des Kraftfahrzeugs 1 umfassen.

Alternativ zu dem anderen Fahrzeug 10 kann es sich bei dem ersten Objekt 10 auch um eine Infrastruktureinheit wie beispielsweise eine Ampelanlage handeln. Das andere Fahrzeug 10 oder die Infrastruktureinheit können ihre eigenen Positionsdaten als so genanntes erstes Objekt 10 an die Kommunikationseinrichtung 7 des Kraftfahrzeugs 1 übermitteln, und zwar mithilfe von Vehicle-to-X, Car-to-X oder Car-to-Car-Kommunikation. Alternativ dazu kann das andere Fahrzeug 10 auch Positionsdaten eines von dem anderen Fahrzeug 10 erfassten ersten Objekts 10, bei dem es sich beispielsweise um ein Fahrrad oder ein nicht über entsprechende Kommunikationsmittel verfügendes anderes Kraftfahrzeug 1 handelt, übermitteln. Das andere Fahrzeug 10 oder die Infrastruktureinheit, die die Positionsdaten des ersten Objekts 10 an das Kraftfahrzeug 1 übermitteln, befindet sich hierbei im vorgegebenen Umkreis 11 des Kraftfahrzeugs 1.

Zusätzlich oder alternativ zu den dem Kraftfahrzeug 1 bereitgestellten Umgebungsdaten, die die erfasste Fahrzeugumgebung, die Eigenposition des Kraftfahrzeugs 1 und die empfangenen Positionsdaten des anderen Fahrzeugs 10 umfassen, können im Kraftfahrzeug 1 auch Kartendaten, insbesondere 3D-Kartendaten, dazu verwendet werden, das Verfahren zum Warnen des Fahrers des Kraftfahrzeugs 1 durchzuführen. Anhand der Kartendaten kann beispielsweise überprüft werden, ob sich im Sichtbereich 13 zwischen dem Kraftfahrzeug 1 und dem anderen Fahrzeug 10 die Bäume 4 befinden, durch die das andere Fahrzeug 10 verdeckt wird. Die entsprechenden Informationen über den sich dort befindenden Wald können also beispielsweise auch aus den in dem Kraftfahrzeug 1 hinterlegten Kartendaten hervorgehen. Dies ist insbesondere dann hilfreich, falls es sich bei dem zweiten Objekt 4 um eine topologische Erhebung, wie beispielsweise einen Hügel handelt, die anhand von 3D-Kartendaten im Kraftfahrzeug 1 hinterlegt sein kann.

Zusätzlich zu der in Fig. 1 skizzierten Frontkamera als Erfassungseinrichtung 5 ist es möglich, dass auch eine Blickrichtung des Fahrers durch Komponenten der Erfassungseinrichtung 5 im Innenraum des Kraftfahrzeugs 1 erfasst wird. Mit einer Innenkamera kann beispielsweise eine Augenposition und/oder eine Kopfposition des Fahrers des Kraftfahrzeugs 1 bestimmt werden und dadurch der Sichtbereich 13 derart eingeschränkt werden, dass nur der Sichtbereich 13 berücksichtigt wird, der für den Fahrer des Kraftfahrzeugs 1 in Richtung des anderen Fahrzeugs 10 tatsächlich zu sehen ist. Hierdurch ist es beispielsweise möglich, dass verdeckende Bauteile des Kraftfahrzeugs 1 erfasst werden, wie beispielsweise die A-Säule oder ein Rückspiegel des Kraftfahrzeugs 1. Auch falls keine Bäume 4 das andere Fahrzeug 10 für den Fahrer des Kraftfahrzeugs 1 verdecken, kann somit festgestellt werden, ob das andere Fahrzeug 10 durch Bauteile des Kraftfahrzeugs 1 selbst verdeckt wird und somit für den Fahrer des Kraftfahrzeugs 1 nicht sichtbar ist.

Falls festgestellt wird, basierend auf der Blickrichtung des Fahrers des Kraftfahrzeugs 1, dass das andere Fahrzeug 10 zwar unverdeckt ist, jedoch sowohl eine aktuelle Blickrichtung des Fahrers als auch eine in einem vergangenen Zeitraum beispielsweise in den letzten zehn Sekunden ermittelte Blickrichtung des Fahrers darauf hindeutet, dass dieser das andere Fahrzeug 10 nicht gesehen hat, kann die vorgegebene Warnkaskade trotzdem eingeleitet werden, falls sich durch das andere Fahrzeug 10 eine potentiell kritische Situation für das Kraftfahrzeug 1 ergibt. Die vorgegebene Warnkaskade kann also auch dann durchgeführt und eingeleitet werden, wenn es nicht zu einer tatsächlichen Verdeckung des anderen Fahrzeugs 10 durch die Bäume 4 kommt.

Zusätzlich zu den Positionsdaten des anderen Fahrzeugs 10 übermittelt dieses auch seine aktuellen Bewegungsdaten, das heißt beispielsweise eine aktuelle Fahrtrichtung, seine aktuelle Geschwindigkeit sowie eine aktuelle Fahrroute an das Kraftfahrzeug 1. Basierend auf diesen Bewegungsdaten kann eine potentielle Bewegungstrajektorie 17 des anderen Fahrzeugs 10 berechnet werden. Falls sich diese potentielle Bewegungstrajektorie 17 mit einer potentiellen Eigenbewegungstrajektorie 18 des Kraftfahrzeugs 1, die beispielsweise im Navigationsgerät des Kraftfahrzeugs 1 aus einer vom Fahrer ausgewählten Fahrroute hervorgeht, schneidet, wird dies als die potentiell kritische Situation erkannt und die vorgegebene Warnkaskade eingeleitet.

Zudem kann zur Bezifferung der potentiell kritischen Situation und der damit verbundenen Wahl einer Stufe der vorgegebenen Warnkaskade erfolgen, dass das durch das andere Fahrzeug 10 sowie durch eine aktuelle Fahrsituation gegebene Gefahrenpotential abgeschätzt wird. Hierfür wird zum einen ein sogenannter Objektkritikalitätswert als auch ein Situationskritikalitätswert bestimmt. Der Objektkritikalitätswert beziffert, das Gefahrenpotential, das sich dadurch ergibt wohin und wie schnell sich das andere Fahrzeug 10 sowie das Kraftfahrzeug 1 aufeinander zubewegen. Es wird also eine entsprechende Objektkritikalität bestimmt. Der Situationskritikalitätswert enthält Informationen dazu, wie hoch das Gefahrenpotential bei den herrschenden Verkehrsregeln unter Berücksichtigung der Fahrbahn sowie von Verkehrszeichen wie Straßenschildern oder Ampelanlagen zu beziffern ist. Die Situationskritikalität gibt also die Kritikalität der sich potentiell ergebenden Kollision des Kraftfahrzeugs 1 mit dem anderen Fahrzeug 10 unter Berücksichtigung der aktuellen Situation an.

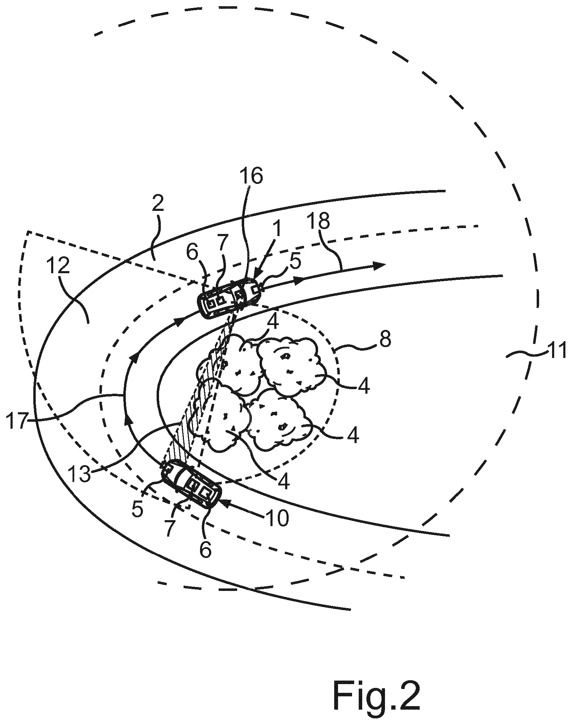

In Fig. 2 sind ebenfalls das Kraftfahrzeug 1 sowie das andere Fahrzeug 10 skizziert. In Fig. 2 fährt das andere Fahrzeug 10 jedoch auf der gleichen Straße 2 wie das Kraftfahrzeug 1. Das andere Fahrzeug 10 befindet sich hinter dem Kraftfahrzeug 1 und ist somit nur durch einen Blick des Fahrers des Kraftfahrzeugs 1 in einen Fahrzeugspiegel 16 prinzipiell zu sehen. Die Straße 2, die in Fig. 2 skizziert ist, weist jedoch einen kurvigen Verlauf auf, weshalb das andere Fahrzeug 10 für den Fahrer des Kraftfahrzeugs 1 durch die Bäume 4 verdeckt ist.

Eine Sichtbarkeit des anderen Fahrzeugs 10 in dem Fahrzeugspiegel 16 des Kraftfahrzeugs 1 wird anhand der empfangenen Positionsdaten des anderen Fahrzeugs 10, vorbestimmten Abbildungseigenschaften des Fahrzeugspiegels 16, einer Positionseinstellung des Fahrzeugspiegels 16 und einer von der Erfassungseinrichtung 5 erfassten Augen- oder Kopfposition des Fahrers des Kraftfahrzeugs 1 ermittelt. Hierfür wird also eine Fahrerposition im Kraftfahrzeug 1 berücksichtigt. Falls sich das andere Fahrzeug 10 im rückwärtigen Raum des Kraftfahrzeugs 1 befindet und somit für den Fahrer des Kraftfahrzeugs 1 nur mithilfe des Fahrzeugspiegels 16 sichtbar ist, zwischen dem Abbildungsbereich des anderen Fahrzeugs 10 auf dem Fahrzeugspiegel 16 und der Position des anderen Fahrzeugs 10 zwar kein zweites Objekt 4, das heißt beispielsweise keine Bäume 4 detektiert werden, jedoch aufgrund der erfassten Blickrichtung des Fahrers, darauf geschlossen werden kann, dass dieser das andere Fahrzeug 10 bisher nicht gesehen hat, jedoch durch dieses andere Fahrzeug 10 eine potentiell kritische Situation für das Kraftfahrzeug 1 besteht, wird dennoch die vorgegebene Warnkaskade eingeleitet. Eine potentiell kritische Situation durch das hinter dem Kraftfahrzeug 1 fahrende andere Fahrzeug 10 kann beispielsweise dann entstehen, wenn sich das andere Fahrzeug 10 besonders schnell von hinten dem Kraftfahrzeug 1 nähert, sodass die Gefahr eines potentiellen Auffahrunfalls besteht.

Insgesamt bleibt festzuhalten, dass anhand von verschiedenen in dem Kraftfahrzeug 1 bereitgestellten Rohdaten ermittelt wird, ob das erste Objekt 10, das heißt das andere Fahrzeug 10, für einen Blick des Fahrers des Kraftfahrzeugs 1 verdeckt ist. Diese Rohdaten umfassen die über die Vehicle-to-X-, Car-to-X- oder Car-to-Car-Kommunikationsverbindung 8 bereitgestellten Positionsdaten des anderen Fahrzeugs 10, dem ersten Objekt 10, die von der Erfassungseinrichtung 5 erfasste Fahrzeugumgebung, Kartendaten und Ortungsdaten des Kraftfahrzeugs 1 zum Erfassen der Eigenposition des Kraftfahrzeugs 1 sowie Informationen über die Blickrichtung des Fahrers, beispielsweise basierend auf Sensordaten von Innenraumkameras des Kraftfahrzeugs 1, die Teil der Erfassungseinrichtung 5 sind. Es wird zudem berücksichtigt, welche Intention das Kraftfahrzeug 1 hat, das heißt, wie dessen Eigenbewegungstrajektorie 18 aussieht. Daraufhin wird bewertet, welche Kritikalität sich durch das andere Fahrzeug 10 für das Kraftfahrzeug 1 ergibt, sowie welche Kritikalität aufgrund der aktuellen Fahrsituation und Verkehrssituation herrscht. Es wird zudem die Fahrerwahrnehmung ermittelt, das heißt festgestellt, inwiefern das andere Fahrzeug 10 vom Fahrer des Kraftfahrzeugs 1 gesehen wird beziehungsweise bereits gesehen wurde oder nicht. Sobald von einer Verdeckung des anderen Fahrzeugs 10 sowie einer sich durch das andere Fahrzeug 10 ergebenden potentiell kritischen Situation für das Kraftfahrzeug 1 auszugehen ist, erfolgt eine Warnkaskade, abhängig davon, wie nah der potentielle Unfallort und wie zeitnah der erwartete Unfallzeitpunkt sind. Mit dem Verfahren kann somit ein Fahrer des Kraftfahrzeugs 1 über ein verdecktes und für die Sicherheit des Kraftfahrzeugs 1 potentiell kritisches erstes Objekt 10 gewarnt werden.

### Bezugszeichenliste

- 1: Kraftfahrzeug
- 2: Straße
- 3: Kreuzung
- 4: Baum
- 5: Erfassungseinrichtung
- 6: Steuervorrichtung
- 7: Kommunikationseinrichtung
- 8: Kommunikationsverbindung
- 10: anderes Fahrzeug
- 11: Umkreis
- 12: Erfassungsbereich
- 13: Sichtbereich
- 16: Fahrzeugspiegel
- 17: Bewegungstrajektorie
- 18: Eigenbewegungstrajektorie

## Patentansprüche

1. Verfahren zum Warnen eines Fahrers eines Kraftfahrzeugs (1), umfassend folgende Schritte:
- Empfangen von Positionsdaten eines ersten Objekts (10) mittels einer Kommunikationseinrichtung (7) des Kraftfahrzeugs (1) von einer fahrzeugexternen Kommunikationseinrichtung (7),
- Erfassen einer Fahrzeugumgebung mittels einer Erfassungseinrichtung (5) des Kraftfahrzeugs (1),
- Erfassen einer Eigenposition des Kraftfahrzeugs (1),
- Überprüfen, ob von der Erfassungseinrichtung (5) in einem anhand der empfangenen Positionsdaten und der Eigenposition bestimmten Sichtbereich (13) zwischen dem Kraftfahrzeug (1) und dem ersten Objekt (10) ein das erste Objekt (10) verdeckendes zweites Objekt (4) erfasst wird, wobei sich das erste Objekt (10) hinter dem Kraftfahrzeug (1) befindet und eine Sichtbarkeit des ersten Objekts (10) auf einem Fahrzeugspiegel (16) ermittelt wird, wofür ein potentieller Abbildungsbereich des ersten Objekts (10) auf dem Fahrzeugspiegel (16) bestimmt und überprüft wird, ob zwischen dem Abbildungsbereich im Fahrzeugspiegel (16) und dem ersten Objekt (10) das das erste Objekt (10) verdeckende zweite Objekt (4) erfasst wird, wobei der Abbildungsbereich anhand von vorbestimmten Abbildungseigenschaften des Fahrzeugspiegels (16), einer Positionseinstellung des Fahrzeugspiegels (16) und einer von der Erfassungseinrichtung (5) erfassten Augenposition und/oder Kopfposition des Fahrers des Kraftfahrzeugs (1) ermittelt wird und das Ermitteln der Sichtbarkeit zudem anhand der empfangenen Positionsdaten erfolgt,
- Überprüfen, ob sich durch das erste Objekt (10) eine potentiell kritische Situation für das Kraftfahrzeug (1) ergibt, wobei, falls das erste Objekt (10) ein Fahrzeug ist, aktuelle Bewegungsdaten vom ersten Objekt (10) empfangen werden, anhand der eine potentielle Bewegungstrajektorie(17) des ersten Objekts (10) ermittelt wird, und falls festgestellt wird, dass sich diese potentielle Bewegungstrajektorie (17) mit einer potentiellen Eigenbewegungstrajektorie (18) des Kraftfahrzeugs (1) schneidet, dies als die sich ergebende potentielle kritische Situation erkannt wird, wobei durch die aktuellen Bewegungsdaten des ersten Objekts (10) dem Kraftfahrzeug (1) Informationen über eine aktuelle Fahrrichtung und Fahrgeschwindigkeit des ersten Objekts (10) vorliegen, und/oder zum Überprüfen, ob sich durch das erste Objekt (10) die potentiell kritische Situation für das Kraftfahrzeug (1) ergibt, ein ein von dem ersten Objekt (10) ausgehendes Gefahrenpotential beziffernder Objektkritikalitätswert sowie ein das von einer potentiellen Verkehrssituation ausgehende Gefahrenpotential beziffernder Situationskritikalitätswert ermittelt werden, anhand welcher die potentiell kritische Situation bewertet wird,
- falls von der Erfassungseinrichtung erkannt wird, dass das erste Objekt (10), das sich hinter dem Kraftfahrzeugs (1) befindet, vom zweiten Objekt (4) verdeckt wird, und sich durch das erste Objekt (10) die potentielle kritische Situation für das Kraftfahrzeug (1) ergibt, Einleiten einer vorgegebenen Warnkaskade.

2. Verfahren nach dem vorhergehenden Anspruch,
wobei das Kraftfahrzeug (1) nur Positionsdaten von der fahrzeugexternen Kommunikationseinrichtung (7) empfängt, wenn sich diese und/oder das erste Objekt (10) innerhalb eines vorgegebenen Umkreises (11) des Kraftfahrzeugs (1) befindet.

3. Verfahren nach einem der vorhergehenden Ansprüche,
wobei ein anderes Fahrzeug (10) oder eine Infrastruktureinheit die fahrzeugexterne Kommunikationseinrichtung (7) umfasst und das erste Objekt (10) ist.

4. Verfahren nach einem der vorhergehenden Ansprüche,
wobei ein anderes Fahrzeug (10) oder eine Infrastruktureinheit die fahrzeugexterne Kommunikationseinrichtung (7) umfasst, mit einer Sensoreinheit das erste Objekt (10) erfasst und die Positionsdaten dieses erfassten ersten Objekts (10) vom Kraftfahrzeug (1) empfangen werden.

5. Verfahren nach einem der vorhergehenden Ansprüche,
wobei anhand von Kartendaten, insbesondere 3D-Kartendaten, überprüft wird, ob sich im Sichtbereich (13) zwischen dem Kraftfahrzeug (1) und dem ersten Objekt (10) das zweite Objekt (4), das das erste Objekt (10) verdeckt, befindet.

6. Verfahren nach einem der vorhergehenden Ansprüche,
wobei beim Bestimmen des Sichtbereichs (13) zusätzlich zu den empfangenen Positionsdaten und der Eigenposition mittels der Erfassungseinrichtung (5) eine Blickrichtung des Fahrers des Kraftfahrzeugs (1) berücksichtigt und überprüft wird, ob ausgehend von einem Blickursprung entlang der Blickrichtung zwischen dem Fahrer und dem ersten Objekt (10) ein das erste Objekt (10) verdeckendes Bauteil des Kraftfahrzeugs (1) erfasst wird.

7. Verfahren nach einem der vorhergehenden Ansprüche,
wobei falls die vorgegebene Warnkaskade bis zu einem Ende der Warnkaskade durchgeführt wird, zum Vermeiden des Sichergebens der potentiell kritischen Situation ein automatischer Notstopp des Kraftfahrzeugs (1) durchgeführt wird.

8. Steuervorrichtung (6) für ein Kraftfahrzeug (1) zum Warnen eines Fahrers des Kraftfahrzeugs (1) , umfassend Mittel eingerichtet zur Ausführung eines Verfahrens nach einem der vorhergehenden Ansprüche.

9. Kraftfahrzeug (1) mit einer Steuervorrichtung (6) nach dem vorhergehenden Anspruch.

## Claims

1. Method for warning a driver of a motor vehicle (1), comprising the following steps:
- receiving position data of a first object (10), from a vehicle-external communication device (7), by means of a communication device (7) of the motor vehicle (1),
- detecting a vehicle environment by means of a detection device (5) of the motor vehicle (1),
- detecting an ego position of the motor vehicle (1),
- checking whether a second object (4) which obscures the first object (10) is detected by the detection device (5) in a visual range (13) between the motor vehicle (1) and the first object (10), which visual range is determined on the basis of the received position data and the ego position, wherein the first object (10) is located behind the motor vehicle (1) and a visibility of the first object (10) in a vehicle mirror (16) is ascertained, for which purpose a potential imaging region of the first object (10) in the vehicle mirror (16) is determined and it is checked whether the second object (4) which obscures the first object (10) is detected between the imaging region in the vehicle mirror (16) and the first object (10), wherein the imaging region is ascertained on the basis of predetermined imaging properties of the vehicle mirror (16), a position setting of the vehicle mirror (16) and an eye position and/or head position of the driver of the motor vehicle (1) detected by the detection device (5), and the visibility is also ascertained on the basis of the received position data,
- checking whether a potentially critical situation for the motor vehicle (1) results from the first object (10), wherein, if the first object (10) is a vehicle, current movement data are received from the first object (10), on the basis of which a potential movement trajectory (17) of the first object (10) is ascertained, and if it is established that this potential movement trajectory (17) intersects with a potential ego movement trajectory (18) of the motor vehicle (1), this is identified as the resulting potential critical situation, wherein the current movement data of the first object (10) provide the motor vehicle (1) with information about a current direction of travel and speed of travel of the first object (10), and/or, in order to check whether the first object (10) results in the potentially critical situation for the motor vehicle (1), an object criticality value quantifying a hazard potential emanating from the first object (10), and a situation criticality value quantifying the hazard potential emanating from a potential traffic situation are ascertained, on the basis of which values the potentially critical situation is assessed,
- if the detection device identifies that the first object (10) located behind the motor vehicle (1) is obscured by the second object (4), and the first object (10) results in the potential critical situation for the motor vehicle (1), initiating a predefined warning cascade.

2. Method according to the preceding claim,
wherein the motor vehicle (1) only receives position data from the vehicle-external communication device (7) if the communication device and/or the first object (10) is located within a predefined vicinity (11) of the motor vehicle (1).

3. Method according to either of the preceding claims,
wherein another vehicle (10) or an infrastructure unit comprises the vehicle-external communication device (7) and is the first object (10).

4. Method according to any of the preceding claims,
wherein another vehicle (10) or an infrastructure unit comprises the vehicle-external communication device (7) and detects the first object (10) by means of a sensor unit, and the position data of this detected first object (10) are received by the motor vehicle (1).

5. Method according to any of the preceding claims,
wherein map data, in particular 3D map data, are used to check whether the second object (4) which obscures the first object (10) is located in the visual range (13) between the motor vehicle (1) and the first object (10).

6. Method according to any of the preceding claims,
wherein, when determining the visual range (13), in addition to the received position data and the ego position, by means of the detection device (5), a line of vision of the driver of the motor vehicle (1) is taken into account and it is checked whether, starting from an origin of vision in the line of vision between the driver and the first object (10), a component of the motor vehicle (1) that obscures the first object (10) is detected.

7. Method according to any of the preceding claims,
wherein, if the predefined warning cascade is carried out to an end of the warning cascade, an automatic emergency stop of the motor vehicle (1) is carried out to avoid the development of the potentially critical situation.

8. Control apparatus (6) for a motor vehicle (1) for warning a driver of the motor vehicle (1), comprising means designed to carry out a method according to any of the preceding claims.

9. Motor vehicle (1) comprising a control apparatus (6) according to the preceding claim.

## Revendications

1. Procédé pour l'avertissement d'un conducteur d'un véhicule automobile (1), comprenant les étapes suivantes :
- réception de données de position d'un premier objet (10) au moyen d'un appareil de communication (7) du véhicule automobile (1) depuis un appareil de communication (7) externe au véhicule,
- détection d'un environnement de véhicule au moyen d'un appareil de détection (5) du véhicule automobile (1),
- détection d'une position propre du véhicule automobile (1),
- fait de vérifier si un second objet (4) recouvrant le premier objet (10) est détecté par l'appareil de détection (5) dans un champ de vision (13) établi à l'aide des données de position reçues et de la position propre entre le véhicule automobile (1) et le premier objet (10), dans lequel le premier objet (10) se trouve derrière le véhicule automobile (1) et une visibilité du premier objet (10) est déterminée sur un rétroviseur de véhicule (16), à cet effet, une zone de représentation potentielle du premier objet (10) sur le rétroviseur de véhicule (16) est établie et vérifiée si le second objet (4) recouvrant le premier objet (10) est détecté entre la zone de représentation dans le rétroviseur de véhicule (16) et le premier objet (10), dans lequel la zone de représentation est déterminée à l'aide de propriétés de représentation préétablies du rétroviseur de véhicule (16), d'un réglage de position du rétroviseur de véhicule (16) et d'une position des yeux et/ou d'une position de la tête du conducteur du véhicule automobile (1) détectée par l'appareil de détection (5) et la détermination de la visibilité est en outre effectuée à l'aide des données de position reçues,
- fait de vérifier si le premier objet (10) résulte en une situation potentiellement critique pour le véhicule automobile (1), dans lequel, si le premier objet (10) est un véhicule, des données de mouvement actuelles sont reçues du premier objet (10), à l'aide desquelles une trajectoire de mouvement (17) potentielle du premier objet (10) est déterminée, et si l'on constate que ladite trajectoire de mouvement (17) potentielle croise une trajectoire de mouvement propre (18) potentielle du véhicule automobile (1), ceci est reconnu comme la situation critique potentielle qui en résulte, dans lequel les données de mouvement actuelles du premier objet (10) donnent au véhicule automobile (1) des informations concernant une direction de déplacement et une vitesse de déplacement actuelles du premier objet (10), et/ou, pour permettre de vérifier si la situation potentiellement critique pour le véhicule automobile (1) résulte du premier objet (10), une valeur de criticité d'objet quantifiant le potentiel de danger émanant du premier objet (10) ainsi qu'une valeur de criticité de situation quantifiant le potentiel de danger émanant d'une situation de circulation potentielle sont déterminées, à l'aide desquelles la situation potentiellement critique est évaluée,
- si l'appareil de détection reconnait que le premier objet (10), lequel se trouve derrière le véhicule automobile (1), est recouvert par le second objet (4), et si la situation critique potentielle pour le véhicule automobile (1) résulte du premier objet (10), démarrage d'une cascade d'avertissement prédéfinie.

2. Procédé selon la revendication précédente,
dans lequel le véhicule automobile (1) ne reçoit des données de position de l'appareil de communication (7) externe au véhicule que si celui-ci et/ou le premier objet (10) se trouvent à l'intérieur d'un périmètre (11) prédéfini du véhicule automobile (1).

3. Procédé selon l'une des revendications précédentes,
dans lequel un autre véhicule (10) ou une unité d'infrastructure comprend l'appareil de communication (7) externe au véhicule et est le premier objet (10).

4. Procédé selon l'une des revendications précédentes,
dans lequel un autre véhicule (10) ou une unité d'infrastructure comprend l'appareil de communication (7) externe au véhicule et détecte le premier objet (10) avec une unité formant capteur et les données de position dudit premier objet (10) détecté sont reçues par le véhicule automobile (1).

5. Procédé selon l'une des revendications précédentes,
dans lequel on vérifie à l'aide de données cartographiques, en particulier de données cartographiques 3D, si le second objet (4), lequel recouvre le premier objet (10), se trouve dans le champ de vision (13) entre le véhicule automobile (1) et le premier objet (10).

6. Procédé selon l'une des revendications précédentes,
dans lequel, lors de l'établissement du champ de vision (13), en plus des données de position reçues et de la position propre, au moyen de l'appareil de détection (5), une direction du regard du conducteur du véhicule automobile (1) est prise en compte et on vérifie si, en partant d'une origine du regard le long de la direction du regard entre le conducteur et le premier objet (10), un composant du véhicule automobile (1) recouvre le premier objet (10) est détecté.

7. Procédé selon l'une des revendications précédentes,
dans lequel, si la cascade d'avertissement prédéfinie est exécutée jusqu'à une fin de la cascade d'avertissement, un arrêt d'urgence automatique du véhicule automobile (1) est exécuté pour éviter de garantir la situation potentiellement critique.

8. Dispositif de commande (6) d'un véhicule automobile (1) pour l'avertissement d'un conducteur du véhicule automobile (1), comprenant des moyens conçus pour mettre en œuvre un procédé selon l'une des revendications précédentes.

9. Véhicule automobile (1) comportant un dispositif de commande (6) selon la revendication précédente.
